Europäisches Patentamt

European Patent Office

Office européen des brevets

(11) Veröffentlichungsnummer: **0 397 127**

**A2**

(12) **EUROPÄISCHE PATENTANMELDUNG**

(21) Anmeldenummer: **90108707.2**

(51) Int. Cl.5: **A23B 4/052**

(22) Anmeldetag: **09.05.90**

(30) Priorität: **10.05.89 DE 3915190**

(43) Veröffentlichungstag der Anmeldung:
**14.11.90 Patentblatt 90/46**

(84) Benannte Vertragsstaaten:
**AT DE DK ES FR IT**

(71) Anmelder: **VEMAG Verdener Maschinen- und Apparatebau GmbH**
**Weserstrasse 32**
**D-2810 Verden (Aller)(DE)**

(72) Erfinder: **Plewa, Manfred**
**Schwanenweg 5**
**D-2810 Verden/Dauelsen(DE)**
Erfinder: **Fuhrmann, Peter**
**Sandhofstrasse 3**
**D-2807 Achim(DE)**
Erfinder: **Feuser, Reiner**
**Fischbacher Strasse 55**
**D-2800 Bremen 44(DE)**

(74) Vertreter: **Eisenführ, Günther, Dipl.-Ing.**
**Martinistrasse 24**
**D-2800 Bremen 1(DE)**

(54) **Dampfraucherzeuger sowie Verfahren zur Erzeugung eines Dampfrauches.**

(57) Ein Dampfraucherzeuger weist eine Schwelkammer (8), einen Rost (12), eine Dampfzufuhr (10) zum Rost (12), einen Rauchabzug (11) und einen Einlaß (6) für die Zufuhr von Holzspänen aus einem Vorratsbehälter (1) auf den Rost (12) auf. Der Rost (12) ist um eine senkrechte Achse (13) rotierbar angeordnet und mit einem Antrieb (15) gekoppelt. Beim Verfahren zur Erzeugung eines Dampfrauches werden die Holzspäne auf einen Rost (12) gegeben und mit überhitztem Wasserdampf durchflutet. Dabei werden die Holzspäne (54) gleichmäßig auf dem Rost (12) geschichtet. Das Rost (12) wird um seine vertikale Achse (13) mit einer solchen Drehzahl gedreht, daß die Holzspäne (54) während etwa einer Umdrehung verbrennen, bevor die verbrannten Holzspäne (54) seitlich abgeworfen werden.

Fig. 1

## Dampfraucherzeuger sowie Verfahren zur Erzeugung eines Dampfrauches

Die Erfindung betrifft einen Dampfraucherzeuger sowie ein Verfahren zur Erzeugung eines Dampfrauches.

Dampfraucherzeuger und Verfahren zur Erzeugung eines Dampfrauches sind bekannt, wobei Holzspäne ausschließlich überhitztem Wasserdampf ausgesetzt und durch Pyrolyse in Asche umgewandelt werden. Hiervon zu unterscheidensind Raucherzeuger, bei denen Holzspäne entzündet und mittels zugeführter Verbrennungsluft verbrannt werden.

Die aus dem Stand der Technik bekannten Dampfraucherzeuger enthalten ein feststehendes Rost. Daraus ergibt sich der Nachteil, daß die Späne nur ungleichmäßig verbrennen, da der Grad ihrer Verbrennung im wesentlichen von ihrer Lage auf dem Rost abhängig ist. D. h. diejenigen Holzspäne, die sich an einer Stelle auf dem Brennrost befinden, welche vom überhitzten Wasserdampf nicht so stark wie andere Stellen durchflutet werden, werden nicht vollständig pyrolisiert. Dieser Effekt führt zu einer ungleichmäßigen Verbrennung der Holzspäne in Abhängigkeit von der Lage auf dem Rost, so daß sich ein hoher Verbrauch an Holzspänen ergibt. Außerdem verklumpen die nur teilweise verbrannten Holzspäne miteinander sowie mit den Ascheresten. Diese Klumpen haben ein erheblich größeres Volumen als vollständig zu Asche verbrannte Holzspäne, so daß das Brennrost wegen seiner beschränkten Fläche häufiger gereinigt werden muß. Außerdem kommt es häufig vor, daß sich die nur teilweise verbrannten Holzspanklumpen am Rost festsetzen, was zu einer aufwendigeren Reinigung führt. Als weiterer Nachteil weisen die bekannten Dampfraucherzeuger ein sehr großes Bauvolumen auf.

Aus der DE-OS 33 33 870 ist ein Reaktor zum Verbrennen und Vergasen von körniger Kohle bekannt. Der bekannte Reaktor weist einen Rost, eine Dampfzufuhr zum Rost, einen Rauchabzug und einen Einlaß für die Zufuhr von körniger Kohle auf, wobei der Rost um eine senkrechte Achse rotierbar angeordnet und mit einem Antrieb gekoppelt ist. Der Reaktor ist oberhalb des Rostes so mit der Kohle aufgefüllt, daß sie innerhalb des Reaktors ein Festbett bildet. Als Vergasungsmittel werden Wasserdampf und Sauerstoff oder Luft in den Innenbereich des Drehrostes geleitet, der als kegelförmiges Hohlteil ausgebildet ist, und treten auf der Oberseite des Drehrostes aus und werden vom Drehrost durch das Kohlefestbett nach oben geleitet. Durch die im Festbett des Reaktors aufwärts steigenden Vergasungsmittel entstehen im Bett hohe Temperaturen, die nach oben abnehmen, wobei sich unmittelbar über dem Drehrost eine Ascheschicht ausbildet. Diese Asche fällt seitlich vom Drehrost in einen unterhalb des Drehrostes angeordneten Aschekanal nach unten. Die Temperatur des Kohlefestbettes im Reaktorbehälter wird gemessen und bei Abweichen von einem Sollwert die Drehzahl des Drehrostes in einer Weise verändert, daß bei zu hoher Temperatur die Drehzahl gesenkt und bei zu niedriger Temperatur die Drehzahl erhöht wird. Mit dieser Regelung soll vermieden werden, daß der Vergasungsbetrieb aus dem Gleichgewicht gerät und dabei vor allem die Höhe der Ascheschicht über dem Drehrost stark schwankt. Zwar wird bei diesem Reaktor aufgrund der drehbaren Anordnung des Rostes eine recht gleichmäßige Durchflutung des Kohlefestbettes mit dem Vergasungsmittel erzielt; jedoch wird zur Ausbildung des Festbettes ein voluminöser Reaktorbehälter benötigt, an dessen Innenwänden sich das Festbett abstützen und entlang nach unten rutschen kann. Es hat sich jedoch gezeigt, daß eine Verbrennung in einem Festbett nicht sehr effektiv ist, zumal beispielsweise Holzspäne - insbesondere wegen ihrer geringen Festigkeit - kaum zur Ausbildung eines Festbettes geeignet sind. Außerdem ist die Regelung zur Aufrechterhaltung der gewünschten Temperatur recht kompliziert.

Demgegenüber liegt der Erfindung die Aufgabe zugrunde, einen Dampfraucherzeuger zu schaffen, bei dem zu verbrennendes Material so vollständig pyrolisiert werden kann, daß der Verbrauch an diesem Material niedrig ist, ohne daß eine aufwendige Regelung erforderlich ist. Eine weitere Aufgabe der Erfindung liegt darin, einen Dampfraucherzeuger mit einer kompakten Bauform zu schaffen.

Diese Aufgabe wird dadurch gelöst, daß ein Dampfraucherzeuger mit einer Schwelkammer geschaffen wird, die einen Rost, eine Dampfzufuhr zum Rost, einen Rauchabzug und einen Einlaß für die Zufuhr von zu verbrennendem Material aufweist, wobei der Rost um eine senkrechte Achse rotierbar angeordnet und mit einem Antrieb gekoppelt ist, und sich dadurch auszeichnet, daß
- es sich bei dem zu verbrennenden Material um Holzspäne handelt,
- der Rost zur Aufnahme der Holzspäne ausgebildet ist,
- der Antrieb den Rost mit einer solchen Drehzahl dreht, daß die auf dem Rost liegenden Holzspäne während etwa einer Umdrehung verbrennen, und
- über dem Rost ein Abstreifelement zum seitlichen Abwurf der verbrannten Holzspäne ortsfest angeordnet ist.

Durch die drehbare Anordnung des Rostes wird erfindungsgemäß erreicht, daß die auf dem Rost liegenden Holzspäne nicht nur bestimmten einzelnen, sondern einer Vielzahl von überhitzen Wasserdampfschwaden ausgesetzt werden, indem sie aufgrund der Drehbewegung des Rostes durch den überhitzten Wasserdampf bewegt werden. Somit wird vermieden, daß an vergleichsweise ungünstigen Stellen liegende Holzspäne nur teilweise verbrannt werden. Vielmehr wird aufgrund der erfindungsgemäßen Anordnung sichergestellt, daß auf problematischen Stellen des Rostes liegende Holzspäne auch intensiveren Wasserdampfschwaden ausgesetzt werden können. Dies trifft insbesondere für die am Rand des Rostes liegenden Holzspäne zu, da sie aufgrund des größeren Abstandes zur Drehachse eine größere Umfangsgeschwindigkeit haben und somit durch größere Bereiche des Wasserdampfes hindurch bewegt werden.

Für die Verbrennung genügt erfindungsgemäß etwa eine Umdrehung, da spätestens nach einer Umdrehung alle in Frage kommenden Wasserdampfschwaden durchfahren wurden. Hierzu ist die Drehzahl des Antriebs so zu wählen, daß die Holzspäne während etwa einer Umdrehung verbrennen. Die Holzspäne können daher nach Verbrennung gegen Ende einer Umdrehung von dem erfindungsgemäßen Abstreifelement seitlich abgeworfen werden, so daß das Rost hinter dem Abstreifelement von den verbrannten Holzspänen befreit ist und somit wieder neue Holzspäne aufnehmen kann. Auf diese Weise wird in einfacher und effektiver Weise eine vollständige Verbrennung der Holzspäne erreicht.

Außerdem läßt sich durch die erfindungsgemäße Anordnung die Schwelkammer kompakter gestalten, was auch eine kleinere Bauform des gesamten Dampfraucherzeugers ergibt.

Vorzugsweise ist der Antrieb des Rostes regelbar. Es kann auch ein Zeitwerk vorgesehen werden, das den Antrieb des Rostes in Intervallen ein- und ausschaltet.

Damit das Abstreifelement eine besonders gute Abstreifwirkung erhält, sollte es sich vorzugsweise im wesentlichen radial zur senkrechten Achse des Rostes erstrecken.

Besonders vorteilhaft ist es, wenn der Rost aus einer Durchflutungsöffnungen enthaltenden Scheibe besteht, die konzentrisch auf einer Welle gelagert ist. Eine kreisförmige Scheibe ergibt eine besonders kompakte Bauform. Dabei können die Durchflutungsöffnungen zum einen Teil aus kreisförmigen und zum anderen Teil aus Langlöchern bestehen, die zwischen den kreisförmigen Löchern sowohl parallel als auch rechtwinklig zueinander angeordnet sind, wodurch eine gute Durchflutung der auf dem Rost liegenden Holzspäne mit überhitztem Wasserdampf gewährleistet wird.

Für die Überhitzung des Wasserdampfes kann bei einer weiteren Ausführungsform innerhalb der Dampfzufuhr eine Heizeinrichtung zur Überhitzung des Dampfes angeordnet sein, welche vorzugsweise aus elektrischen Heizstäben besteht.

Um eine gute Durchflutung der Holzspäne zu gewährleisten, mündet bei einer weiteren vorteilhaften Ausführung die Dampfzufuhr unterhalb des Rostes in die Schwelkammer. Dabei kann die Schwelkammer vorzugsweise an ihrer Unterseite durch den Rost abgeschlossen werden, was zu einer weiteren Verringerung der Bauform führt.

Bei einer weiteren vorzugsweisen Ausgestaltung der Erfindung ist der Einlaß für die Zufuhr der Holzspäne über dem Rost angeordnet und mit einem oberhalb der Schwelkammer befindlichen Vorratsbehälter über eine Schleuse verbunden, die eine unmittelbare Verbindung zwischen Vorratsbehälter und Schwelkammer verhindert, so daß der Schwelbrand nicht aus der Schwelkammer in den Vorratsbehälter gelangen kann. Beispielsweise besteht die Schleuse dabei aus einem in mehreren Kammern unterteilten Dosierbehälter, der auf einer Welle eines Rührwerkes mit diesem drehbar befestigt ist und über eine obere Öffnung mit dem Vorratsbehälter und über eine gegenüber der oberen Öffnung drehwinkelversetzten Einlaßöffnung für die Zufuhr der Holzspäne mit der Schwelkammer verbunden ist. Die Kammern eines solchen Dosierbehälters sind nur entweder zum Einlaß oder zum Auslaß offen und stehen daher nur entweder mit dem Vorratsbehälter oder der Schwelkammer in Verbindung. Der relative Versatz von oberer Öffnung und Einlaß für die Zufuhr der Holzspäne in die Schwelkammer stellt sicher, daß keine direkte, die Schleuse überbrückende Verbindung zwischen Vorratsbehälter und Schwelkammer besteht.

Bei einer Weiterbildung dieser Ausführung kann die Welle des Rührwerkes mit einem Antrieb gekoppelt sein, der vorzugsweise regelbar ist. Ebenfalls kann ein Zeitwerk vorgesehen sein, das den Antrieb in Intervallen ein- und ausschaltet.

Alternativ kann die Welle des Rührwerkes senkrecht angeordnet und der Rost an dieser Welle befestigt sein.

Eine weitere Ausführung der Erfindung mit einer Zuleitung zur Zuführung von Dampf und beigemischter Luft zu einem innerhalb der Dampfzufuhr befindlichen Überhitzer zeichnet sich dadurch aus, daß in der Zuleitung ein Druckminderventil und in Strömungsrichtung dahinter ein Manometer und eine Blende sitzen, wobei der Innenquerschnitt der Blende im Verhältnis zum Innenquerschnitt der Zuleitung so klein ist, daß sich in der Zuleitung nur ein vernachlässigbar kleiner Gegendruck einstellen kann. Auf diese Weise können die Dampfmenge und die beigemischte Luftmenge genau reproduzierbar eingestellt werden. Vorzugsweise beträgt das Verhältnis des Innenquerschnittes der Blende zum Innenquerschnitt der Zuleitung etwa 1:4.

Eine weitere bevorzugte Ausführung der Erfindung kann sich auszeichnen durch einen unterhalb des Rostes angeordneten Aschekasten und eine Sprüheinrichtung mit auf den Aschekasten gerichteten Sprühdüsen. Durch eine derartige Sprüheinrichtung, durch dessen Sprühdüsen Wasser auf die verbrannten Späne im Aschekasten gesprüht wird, wird ein Nachglimmen der Späne im Aschekasten verhindert. Dadurch kann der Gesamtkohlenstoffgehalt des Abgases entscheidend herabgesetzt werden.

Bei einer weiteren bevorzugten Ausführung der Erfindung kann eine Einrichtung vorgesehen sein zur Steuerung eines Überhitzers und der Zuführung von Dampf durch die Dampfzufuhr derart, daß nach Abschaltung des Überhitzers für eine einstellbare Zeit Dampf zugeführt wird.

Gegenstand der Erfindung ist ferner ein Verfahren zur Erzeugung eines Dampfrauches, bei welchem zu verbrennendes Material mit überhitztem Wasserdampf durchflutet wird. Die der Erfindung zugrundeliegende Aufgabe wird bei einem derartigen Verfahren dadurch gelöst, daß es sich bei dem zu verbrennenden Material um Holzspäne handelt, die Holzspäne gleichmäßig auf dem Rost geschichtet werden und das Rost um seine vertikale Achse mit einer solchen Drehzahl gedreht wird, daß die Holzspäne während etwa einer Umdrehung verbrennen, bevor die verbrannten Holzspäne seitlich abgeworfen werden. Auf diese Weise werden die Holzspäne durch größere Bereiche des Wasserdampfes bewegt. Dabei genügt erfindungsgemäß etwa eine Umdrehung, da spätestens nach einer Umdrehung alle in Frage kommenden Bereiche durchfahren wurden. Hierzu ist die Drehzahl so zu wählen, daß die Holzspäne während etwa einer Umdrehung verbrennen. Somit können die Holzspäne vorzugsweise nach Verbrennung gegen Ende einer Umdrehung seitlich abgeworfen werden, so daß das Rost hinter der Abwurfstelle von den verbrannten Holzspänen befreit ist und somit wieder neue Holzspäne aufnehmen kann.

Besonders wirksam ist es, wenn die Holzspäne auf dem Rost von unten mit dem überhitztem Wasserdampf durchflutet werden.

Vorzugsweise wird der Wasserdampf vor Durchflutung der Holzspäne überhitzt, wobei er beispielsweise von etwa 150° C (Einleitungstemperatur) auf etwa 380° C (Durchflutungstemperatur) überhitzt wird.

Wenn eine schnellere Verbrennung erforderlich ist, kann der Wasserdampf zusätzlich noch einen geringen Anteil Luft enthalten.

Zur Vermeidung von Nachglimmen der Späne werden die verbrannten Holzspäne nach ihrem Abwurf vom Rost mit Wasser besprüht, was vorzugsweise in Intervallen erfolgt, um den Wasserverbrauch niedrig zu halten.

Nach Räucherende kann bei abgeschaltetem Überhitzer noch für eine einstellbare Zeit Wasserdampf zugeführt werden.

Im folgenden wird die Erfindung anhand des in den Figuren dargestellten Ausführungsbeispiels erläutert. Es zeigen:

Fig. 1 einen vertikalen Querschnitt durch den Dampfraucherzeuger;

Fig. 2 schematisch in Draufsicht die Anordnung des Rostes in der Schwelkammer;

Fig. 3 ausschnittsweise die Oberfläche des Rostes; und

Fig. 4 einen Schnitt durch die Schleuse in vergrößertem Maßstab.

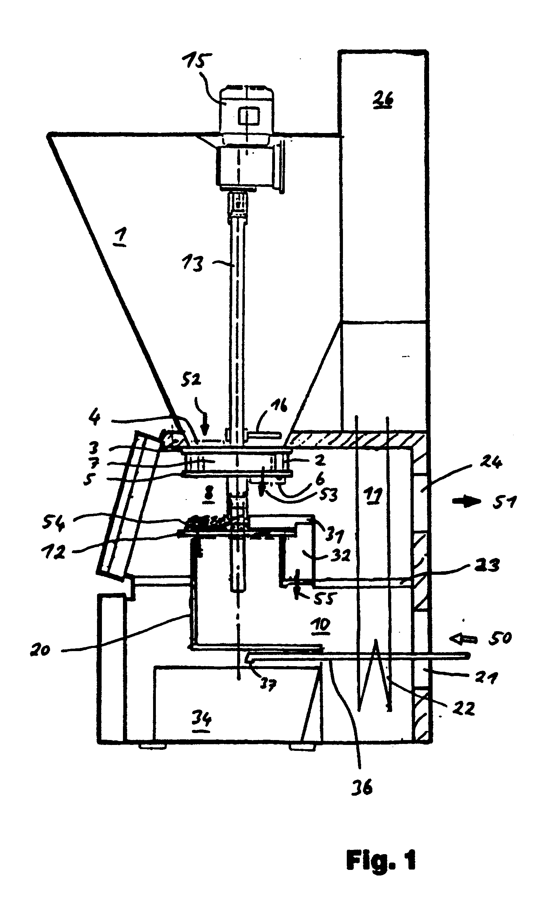

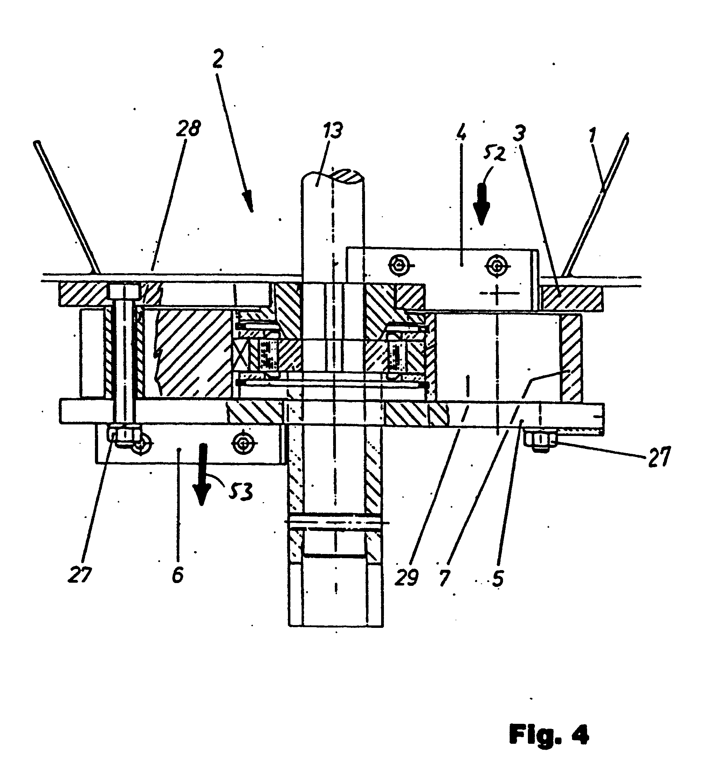

Wie Fig. 1 zeigt, ist an der Unterseite eines trichterförmigen Vorratsbehälters 1 eine im ganzen mit 2 bezeichnete Schleuse angeflanscht. Sie besteht aus einer oberen Platte 3 mit einer oberen Öffnung 4, die zum Vorratsbehälter 1 hin offen ist, einer unteren Platte 5 mit der nach unten hin offenen Einlaßöffnung 6 für die Zufuhr von Holzspänen sowie einer zwischen den beiden Platten 3, 5 angeordneten Scheibe 7. Der weitere Aufbau der Schleuse 2 wird unten anhand von Fig. 4 näher beschrieben werden.

Unterhalb der Schleuse 2 befindet sich eine Schwelkammer 8, in deren Unterseite eine Dampfzufuhr 10 mündet. Von der Schwelkammer 8 setzt sich seitlich (in Fig. 1 nach rechts) ein Rauchabzug 11 fort. An der Unterseite der Schwelkammer 8 ist ein Rost 12 angeordnet, und zwar genau dort, wo die Dampfzufuhr 10 in die Schwelkammer 8 mündet.

Durch den Vorratsbehälter 1, die Schleuse 2, die Schwelkammer 8 und in die Dampfzufuhr 10 erstreckt sich zentrisch eine Welle 13, die von einem Antriebsmotor 15 angetrieben wird, der im Kopfbereich des Vorratsbehälters 1 angeordnet ist. Die Drehzahl des Antriebsmotors 15 kann von einer nicht dargestellten Regelung geregelt werden. Ferner kann auch ein Zeitwerk vorgesehen sein, das den Antriebsmotor 15 in Intervallen ein- und ausschaltet. Auf der Welle 13 sind innerhalb des Vorratsbehälters 1 oberhalb der Dosierschleuse 2 Rührstäbe 16 befestigt, die ein Verklumpen der Holzspäne verhindern. Ebenfalls ist mit der Welle 13 die Scheibe 7 der Schleuse 2 gekuppelt. Ferner ist der Rost 12 an der Welle befestigt.

Die Dampfzufuhr 10 führt von einer Dampfeinlaßöffnung 21 im Gehäuse des Dampfraucherzeugers an elektrischen Heizstäben 22 vorbei und über einen zylindrischen Abschnitt 20 zum Rost 12. In die Dampfeinlaßöffnung 21 mündet eine nicht dargestellte Zuleitung, die Dampf und beigemischte Luft in die Dampfzufuhr 10 leitet. In der Zuleitung sitzen ein Druckminderventil und in Strömungsrichtung dahinter ein Manometer und eine Blende (ebenfalls nicht dargestellt), wobei der Innenquerschnitt der Blende im Verhältnis zum Innenquerschnitt der Zuleitung so klein ist, daß sich in der Zuleitung nur ein vernachlässigbar kleiner Gegendruck einstellen kann. Das Verhältnis des Innenquerschnittes der Blende zum Innenquerschnitt der Zuleitung kann etwa 1:4 betragen.

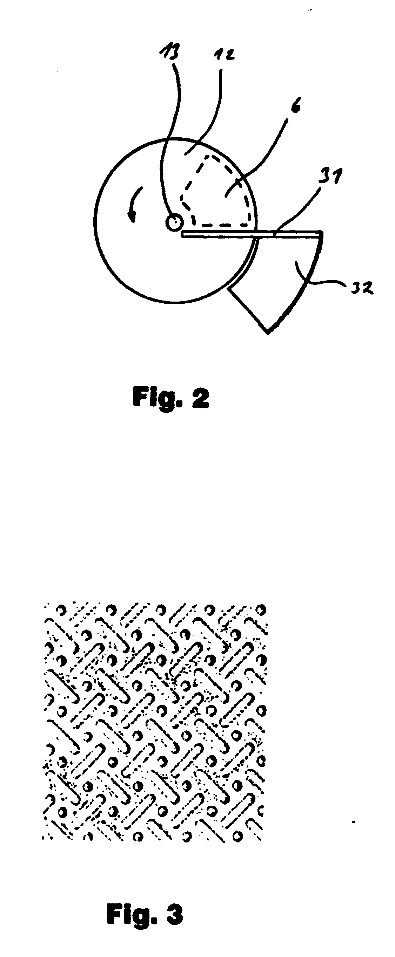

Der zylindrische Abschnitt 20 hat die Form eines Topfes und endet direkt unterhalb des Rostes 12. Entsprechend der zylindrischen Form des Abschnittes 20 ist der Rost 12 als kreisförmige Scheibe ausgebildet (vgl. Fig. 2), wobei der Rand des Rostes 12 etwas über den des darunter liegenden zylindrischen Abschnittes 20 hinausragt. Wie bereits erwähnt ist der Rost 12 an der Unterseite der Schwelkammer 8 angeordnet, während direkt über dem Rost 12 die Oberseite der Schwelkammer 8 von der Schleuse 2 abgeschlossen wird, deren Einlaßöffnung 6 für die Zufuhr von Holzspänen direkt auf das Rost 12 gerichtet ist. Die Anordnung der Einlaßöffnung 6 über dem Rost 12 ist in Fig. 2 gestrichelt dargestellt. Seitlich außerhalb der Schleusen-Rost-Anordnung mündet die Schwelkammer 8 in den Rauchabzug 11 mit einer Rauchabzugsöffnung 24 im Gehäuse des Dampfraucherzeugers. Dampfzufuhr 10 und Rauchabzug 11 sind durch eine Trennwand 23 voneinander getrennt, wodurch gewährleistet wird, daß der überhitzte Wasserdampf von der Dampfzufuhr 10 vollständig durch das Rost 12 in die Schwelkammer 8 geleitet wird.

In einem seitlich am Gehäuse des Dampfraucherzeugers angeordneten Elektroschrank 26 sind die Stromversorgungen und Regeleinrichtungen für den Antriebsmotor 15, für die innerhalb der Dampfzufuhr 10 angeordneten elektrischen Heizstäbe 22 und die Zuführung des Dampfes untergebracht.

Direkt über der Oberfläche des scheibenförmigen Rostes 12 ist ein aufrecht stehendes Abstreifblech 31 ortsfest angeordnet, das sich radial zur Welle 13 über den Rand des Rostes 12 hinaus erstreckt und dabei die eine Seitenwand eines Schachtes 32 begrenzt. Dieser Schacht 32 ist neben dem Rost 12 angeordnet und auf einen unterhalb der Dampfzufuhr 10 liegenden Aschekasten 34 gerichtet. Wie in Fig. 2 argestellt ist, liegt die über dem Rost 12 angeordnete Einlaßöffnung 6 für die Zufuhr von Holzspänen, in Drehrichtung betrachtet, direkt vor und der außerhalb des Rostes 12 liegende Schacht 32 direkt hinter dem Abstreifblech 31.

Oberhalb des Aschekastens 34 ist eine Sprüheinrichtung 36 angeordnet, deren Sprühdüsen 37 in den Aschekasten 34 gerichtet sind. Durch eine nicht dargestellte Leitung wird Wasser der Sprüheinrichtung 36 zugeführt.

In Fig. 3 ist ein Ausschnitt des scheibenförmigen Rostes 12 dargestellt. Entsprechend dieser Darstellung enthält die gesamte Scheibe des Rostes 12 Durchflutungsöffnungen, die zum einen Teil aus kreisförmigen und zum anderen Teil aus Langlöchern bestehen. Die Langlöcher sind zwischen den kreisförmigen Löchern angeordnet und verlaufen sowohl parallel als auch rechtwinklig zueinander.

Fig. 4 zeigt den Aufbau der Schleuse 2 im einzelnen. Die Platten 3, 5 sind mittels Schrauben 27 unter Zwischenschaltung von Abstandshaltern 28 so miteinander verbunden, daß die Scheibe 7 zwischen ihnen drehbar bleibt. Die die untere Platte 5 durchsetzende Einlaßöffnung 6 ist gegenüber der die obere Platte 3 durchsetzenden oberen Öffnung 4 um 180° zur Mittelachse, d. h. zur Achse der Welle 13 versetzt. In der Scheibe 7 sind - gleichmäßig am Umfang verteilt - drei sich parallel zur Achse der Welle erstreckende die Scheibe 7 vollständig durchsetzende Durchbrüche 29 vorgesehen, welche die Kammern der Schleuse 2 bilden, die gegeneinander abgetrennt sind.

Im folgenden soll die Funktionsweise des Dampfraucherzeugers beschrieben werden.

Wasserdampf wird bei einer Temperatur von etwa 150°C in Richtung des Pfeiles 50 (Fig. 1) durch die Dampfeinlaßöffnung 21 in die Dampfzufuhr 10 eingeleitet, wo er anschließend von den elektrischen Heizstäben 22 auf etwa 380°C überhitzt wird. Danach wird der überhitzte Wasserdampf durch den zylindrischen Abschnitt 20 auf das Rost 12 und durch die im Rost enthaltenen Durchflutungsöffnungen (Fig. 3) in die Schwelkammer 8 geleitet. Mit Hilfe des überhitzten Wasserdampfes werden nun die auf dem Rost 12 liegenden Holzspäne 54 pyrolytisch in Asche umgewandelt. Der dabei entstehende Dampfrauch wird entsprechend dem Pfeil 51 durch die Rauchabzugsöffnung 24 des Rauchabzuges 11 zur weiteren Verwendung aus dem Dampfraucherzeuger herausgeleitet.

Der trichterförmige Vorratsbehälter 1 ist mit Holzspänen gefüllt, wobei sie durch die Schleuse 2 sukzessiv auf das Rost 12 gegeben werden. Befindet sich dabei in der Schleuse 2 eine Kammer 29 unter der oberen Öffnung 4 (vgl. Fig. 1 und 4), so fallen in Richtung des Pfeils 52 die Holzspäne vom Vorratsbehälter 1 in die entsprechende Kammer, so daß sie sich mit Holzspänen füllt. Bei Drehung der Scheibe 7 mit der Wel e 13 werden diese Späne auf einem Kreisbogen um die Welle 13 herumgeführt, bis sich die betreffende Kammer 29 über der Einlaßöffnung 6 der Schwelkammer 8 befindet und die Späne in Richtung des Pfeils 53 auf den Rost 12 fallen können.

Die auf den Rost 12 gegebenen Holzspäne 54 werden aufgrund der Drehung des Rostes 12 um etwa 360° um die Welle 13 herumgeführt, bis sie gegen die der Einlaßöffnung 6 gegenüberliegenden Seite des Abstreifbleches 31 stoßen und aufgrund des Druckes von den nachfolgenden Holzspänen entlang des Abstreifbleches 31 nach außen gedrückt und seitlich in den Schacht 32 abgeworfen werden (vgl. Fig. 2). Dabei ist die Drehgeschwindigkeit des scheibenförmigen Rostes 12 so gewählt, daß die Holzspäne 54 während einer einzigen Umdrehung vollständig verbrennen. Wenn die zu Asche gewordenen Holzspäne 54 aufgrund des Abstreifers 31 in den Schacht 32 geworfen worden sind, fällt die Asche in Richtung des Pfeils 55 durch den Schacht 32 in den Aschekasten 34. Um ein Nachglimmen der Asche im Aschekasten 34 zu vermeiden, wird die Asche im Aschekasten 34 aus den Sprühdüsen 37 der Sprüheinrichtung 36 in Intervallen mit Wasser besprüht.

Ergänzend sei angemerkt, daß bei einer weiteren Ausführung der Wasserdampf zusätzlich noch einen geringen Anteil Luft enthalten kann, wenn eine stärkere Pyrolyse bzw. Verbrennung gewünscht wird.

Nach Räucherende kann für eine einstellbare Zeit bei abgeschalteten Heizstäben 22 noch Wasserdampf durch den zylindrischen Abschnitt 20 und das Rost 12 geleitet werden.

## Ansprüche

1. Dampfraucherzeuger mit einer Schwelkammer (8), die einen Rost (12), eine Dampfzufuhr (10) zum Rost (12), einen Rauchabzug (11) und einen Einlaß (6) für die Zufuhr von zu verbrennendem Material aufweist, wobei der Rost (12) um eine senkrechte Achse (13) rotierbar angeordnet und mit einem Antrieb (15) gekoppelt ist,
dadurch gekennzeichnet, daß
- es sich bei dem zu verbrennenden Material um Holzspäne handelt,
- der Rost (12) zur Aufnahme der Holzspäne ausgebildet ist,
- der Antrieb (15) den Rost (12) mit einer solchen Drehzahl dreht, daß die auf dem Rost (12) liegenden Holzspäne (54) während etwa einer Umdrehung verbrennen, und
- über dem Rost (12) ein Abstreifelement (31) zum seitlichen Abwurf der verbrannten Holzspäne (54) ortsfest angeordnet ist.

2. Dampfraucherzeuger nach Anspruch 1,
dadurch gekennzeichnet, daß der Antrieb (15) des Rostes (12) regelbar ist.

3. Dampfraucherzeuger nach Anspruch 1 oder 2,
gekennzeichnet durch ein Zeitwerk, das den Antrieb (15) des Rostes (12) in Intervallen ein- und ausschaltet.

4. Dampfraucherzeuger nach einem der Ansprüche 1 bis 3,
dadurch gekennzeichnet, daß sich das Abstreifelement (31) im wesentlichen radial zur senkrechten Achse (13) des Rostes (12) erstreckt.

5. Dampfraucherzeuger nach einem der Ansprüche 1 bis 4,
dadurch gekennzeichnet, daß der Rost (12) aus einer Durchflutungsöffnungen enthaltenden Scheibe besteht, die konzentrisch auf einer Welle (13) gelagert ist.

6. Dampfraucherzeuger nach Anspruch 4,
dadurch gekennzeichnet, daß die Durchflutungsöffnungen zum einen Teil aus kreisförmigen und zum anderen Teil aus Langlöchern bestehen, die zwischen den kreisförmigen Löchern sowohl parallel als auch rechtwinklig zueinander angeordnet sind.

7. Dampfraucherzeuger nach einem der Ansprüche 1 bis 6,
dadurch gekennzeichnet, daß der Einlaß (6) für die Zufuhr der Holzspäne über dem Rost (12) angeordnet und mit einem oberhalb der Schwelkammer (8) befindlichen Vorratsbehälter (1) über eine Schleuse (2) verbunden ist, die eine unmittelbare Verbindung zwischen Vorratsbehälter (1) und Schwelkammer (8) verhindert.

8. Dampfraucherzeuger nach Anspruch 7,
dadurch gekennzeichnet, daß die Schleuse (2) aus einem in mehrere Kammern (29) unterteilten Dosierbehälter besteht, der auf einer Welle (13) eines Rührwerkes (16) mit diesem drehbar befestigt ist und über eine obere Öffnung (4) mit dem Vorratsbehälter (1) und über eine gegenüber der oberen Öffnung (4) drehwinkelversetzten Einlaßöffnung (6) für die Zufuhr der Holzspäne mit der Schwelkammer (8) verbunden ist.

9. Dampfraucherzeuger nach Anspruch 7 oder 8,
dadurch gekennzeichnet, daß die Welle (13) mit einem Antrieb gekoppelt ist.

10. Dampfraucherzeuger nach Anspruch 9,
dadurch gekennzeichnet, daß der Antrieb regelbar ist.

11. Dampfraucherzeuger nach Anspruch 9 oder 10,
gekennzeichnet durch ein Zeitwerk, das den Antrieb in Intervallen ein- und ausschaltet.

12. Dampfraucherzeuger nach Anspruch 8,
dadurch gekennzeichnet, daß die Welle (13) des Rührwerkes (16) senkrecht angeordnet und der Rost (12) an der Welle (13) befestigt ist.

13. Dampfraucherzeuger nach einem der Ansprüche 1 bis 12,
mit einer Zuleitung zur Zuführung von Dampf und beigemischter Luft zu einem innerhalb der Dampfzufuhr (10) befindlichen Überhitzer (22),
dadurch gekennzeichnet, daß in der Zuleitung ein Druckminderventil und in Strömungsrichtung dahinter ein Manometer und eine Blende sitzen, wobei der Innenquerschnitt der Blende im Verhältnis zum Innenquerschnitt der Zuleitung so klein ist, daß sich in der Zuleitung nur ein vernachlässigbar kleiner Gegendruck einstellen kann.

14. Dampfraucherzeuger nach Anspruch 13, dadurch gekennzeichnet, daß das Verhältnis des Innenquerschnittes der Blende zum Innenquerschnitt der Zuleitung etwa 1:4 beträgt.

15. Dampfraucherzeuger nach einem der Ansprüche 1 bis 14, gekennzeichnet durch einen unterhalb des Rostes (12) angeordneten Aschekasten (34) und eine Sprüheinrichtung (36) mit auf den Aschekasten (34) gerichteten Sprühdüsen (37).

16. Dampfraucherzeuger nach einem der Ansprüche 1 bis 15, gekennzeichnet durch eine Einrichtung (26) zur Steuerung eines Überhitzers (22) und der Zuführung von Dampf durch die Dampfzufuhr (10) derart, daß nach Abschaltung des Überhitzers (22) für eine einstellbare Zeit Dampf zugeführt wird.

17. Verfahren zur Erzeugung eines Dampfrauches, insbesondere mit Hilfe eines Dampfraucherzeugers nach einem der Ansprüche 1 bis 16, bei welchem zu verbrennendes Material mit überhitztem Wasserdampf durchflutet wird, dadurch gekennzeichnet, daß es sich bei dem zu verbrennenden Material um Holzspäne handelt, die Holzspäne (54) gleichmäßig auf einem Rost (12) geschichtet werden und das Rost (12) um seine vertikale Achse (13) mit einer solchen Drehzahl gedreht wird, daß die Holzspäne (54) während etwa einer Umdrehung verbrennen, bevor die verbrannten Holzspäne (54) seitlich abgeworfen werden.

18. Verfahren nach Anspruch 17, dadurch gekennzeichnet, daß die Holzspäne (54) nach Verbrennung gegen Ende einer Umdrehung seitlich abgeworfen werden.

19. Verfahren nach Anspruch 17 oder 18, dadurch gekennzeichnet, daß die Holzspäne (54) auf dem Rost (12) von unten mit dem überhitztem Wasserdampf durchflutet werden.

20. Verfahren nach einem der Ansprüche 17 bis 19, dadurch gekennzeichnet, daß die verbrannten Holzspäne nach ihrem Abwurf vom Rost (12) mit Wasser besprüht werden.

21. Verfahren nach Anspruch 20, dadurch gekennzeichnet, daß das Wasser in Intervallen gesprüht wird.

22. Verfahren nach einem der Ansprüche 17 bis 21, bei welchem der Wasserdampf von einem Überhitzer (22) überhitzt wird, dadurch gekennzeichnet, daß nach Räucherende bei abgeschaltetem Überhitzer (22) noch für eine einstellbare Zeit Wasserdampf zugeführt wird.

**Fig. 1**

Fig. 2

Fig. 3

**Fig. 4**